**Europäisches Patentamt**

**European Patent Office**

**Office européen des brevets**

(11) Veröffentlichungsnummer: **0 006 450**
A1

## (12) EUROPÄISCHE PATENTANMELDUNG

(21) Anmeldenummer: **79101584.5**

(22) Anmeldetag: **23.05.79**

(51) Int. Cl.³: **G 02 B 5/02**, F 21 V 5/02, G 09 F 9/00, G 12 B 11/02

(30) Priorität: **23.06.78 DE 2827573**

(43) Veröffentlichungstag der Anmeldung: **09.01.80** Patentblatt **80/1**

(84) Benannte Vertragsstaaten: **FR GB IT**

(71) Anmelder: **Blaupunkt-Werke GmbH, Robert-Bosch-Strasse 200, D-3200 Hildesheim (DE)**

(72) Erfinder: **Hehr, Wilfried, Im Krugfeld 15, D-3200 Hildesheim (DE)**

(74) Vertreter: **Eilers, Norbert, Dipl.-Phys., Robert-Bosch-Strasse 200, D-3200 Hildesheim (DE)**

(54) **Grossflächige Lichtquelle.**

(57) Den Gegenstand der Anmeldung bildet eine großflächige Lichtquelle, bestehend aus einem prismatischen lichtdurchlässigen Körper, in den durch eine kleine Seitenfläche Licht eintritt und der eine große Seitenfläche aufweist, durch die das Licht austritt, bei der eine gleichmäßige Leuchtdichteverteilung über die große Seitenfläche erreicht wird, indem der lichtdurchlässige Körper als dünner Keil (1) ausgebildet ist, das Licht durch eine die gegeneinander geneigten großen Seitenflächen (2, 3) verbindenden und auf einer Grundfläche (5) des Keils (1) senkrecht stehenden schmalen Seitenfläche (4) des Keils (1) in diesen eintritt und durch eine der gegeneinander geneigten großen Seitenflächen (2, 3) des Keils (1) austritt.

ACTORUM AG

# BLAUPUNKT-WERKE GMBH 32 HILDESHEIM, Robert-Bosch-Straße 200

PLI Gebranzig-bz/tex1          - 1 -                    20. Juni 1978
                                                        R.Nr. 1576

Die vorliegende Erfindung betrifft eine großflächige Lichtquelle
nach dem Oberbegriff von Anspruch 1.

Derartige Lichtquellen dienen der Beleuchtung von flachen transparenten
Anzeigeelementen, beispielsweise von Flüssigkristall-Displays. Dazu
sind diese Lichtquellen üblicherweise als lichtdurchlässige Platten
ausgebildet, die eine schmale Seitenfläche aufweisen, in die das
Licht einer kleinen Glühbirne eintritt und durch eine der großen
Seitenflächen der Platten das Flüssigkristall-Display durchstrahlend
austritt.

Lichtquellen dieser Art besitzen den Nachteil, daß ihre Leuchtdichte über die Lichtaustrittsfläche ungleichmäßig ist. Diese
Lichtquellen sind daher für die Beleuchtung von beispielsweise
Flüssigkristall-Displays nicht gut geeignet, da die ungleichmäßige Ausleuchtung zu Fehlablesungen der von dem Flüssigkristall-
Display angezeigten Informationszeichen führen kann.

Es stellt sich daher die Aufgabe, eine großflächige Lichtquelle
der eingangs erwähnten Art zu entwickeln, die über ihre gesamte
Lichtaustrittsfläche eine möglichst gleichmäßige Leuchtdichte
aufweist.

Diese Aufgabe wird gemäß der vorliegenden Erfindung dadurch gelöst,
daß der lichtdurchlässige Körper als dünner Keil ausgebildet ist,
das Licht durch eine die gegeneinander geneigten großen Seitenflächen verbindenden und auf einer Grundfläche des Keils senkrecht
stehenden schmalen Seitenfläche des Keils in diesen eintritt und
durch eine der gegeneinander geneigten großen Seitenflächen des
Keils austritt.

# BLAUPUNKT-WERKE GMBH 32 HILDESHEIM, Robert-Bosch-Straße 200

Gemäß vorteilhafter Ausbildungen der Erfindung läßt sich eine Lichtquelle mit hoher Lichtausbeute bei über die gesamte Lichtaustrittsfläche gleichmäßiger Leuchtdichte dadurch erzielen, daß die gegen
die für den Lichtaustritt bestimmte große Seitenfläche geneigte
große Seitenfläche des Keils mit einer dünnen lichtdurchlässigen
Zwischenschicht flächig bedeckt ist, der optische Brechungsindex
dieser Zwischenschicht kleiner ist als der optische Brechungsindex
des Keils und diese Zwischenschicht mit einer das Licht streuend
reflektierenden Pigmentschicht flächig bedeckt ist, wobei die
Zwischenschicht als Klarlack auf die große Seitenfläche des Keils
und die Pigmentschicht als weiße Lackschicht auf die Zwischenschicht
aufgetragen werden.

Nach einen anderen Lösungsweg gehenden vorteilhaften Ausgestaltungen
der Erfindung läßt sich eine Lichtquelle mit hoher Lichtausbeute
bei über die gesamte Lichtaustrittsfläche gleichmäßiger Leuchtdichte erreichen, indem die für den Lichtaustritt bestimmte große
Seitenfläche des Keils mattiert ist, wobei die für den Lichtaustritt
bestimmte große Seitenfläche des Keils eine Vielzahl im wesentlichen
äquidistanter Mikrorillen zur Mattierung aufweist und diese Mikrorillen
zu der Grundfläche des Keils im wesentlichen parallel verlaufen. Zur
Erhöhung der Lichtausbeute wird der Keil an der gegen die für den
Lichtaustritt bestimmten großen Seitenfläche geneigten großen Seitenfläche mit einer Licht streuend reflektierenden Schicht hinterlegt.

Die Vorteile der vorliegenden Erfindung liegen insbesondere darin,
daß mit einfachen Mitteln der gewünschte Effekt einer über die
gesamte Lichtaustrittsfläche gleichmäßigen Leuchtdichte erzielt wird,
wobei das in den keilförmigen prismatischen Körper eintretende Licht
mit herkömmlichen Glühbirnen und anderen Lampen erzeugt werden kann.

**BLAUPUNKT-WERKE GMBH** 32 HILDESHEIM, Robert-Bosch-Straße 200

PLI Gebranzig-bz/text          - 3 -                    20. Juni 1978
R.Nr. 1576

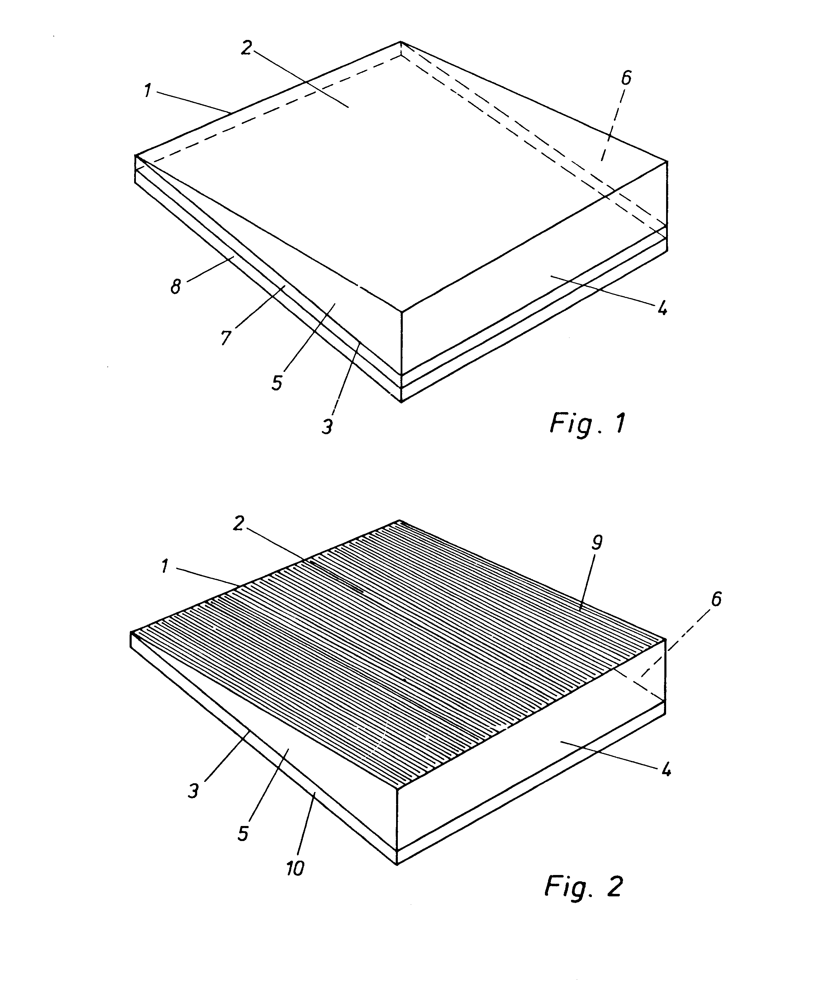

Die Erfindung wird nachfolgend an zwei Figuren näher erläutert.
Dabei zeigt die Figur 1 eine erfindungsgemäß keilförmige Lichtquelle, bei der die eine Seitenfläche mit einer Zwischenschicht
und die Zwischenschicht mit einer das Licht streuend reflektierenden Pigmentschicht überdeckt ist. Die Figur 2 zeigt eine
weitere keilförmige erfindungsgemäße Lichtquelle, bei der die
Lichtaustrittsfläche durch eine Mikrorillenstruktur mattiert ist
und bei der die gegen die Lichtaustrittsfläche geneigte Seitenfläche mit einer Licht streuend reflektierenden Schicht hinterlegt ist.

Die Figur 1 zeigt die erfindungsgemäß als prismatischer Keil 1
ausgebildete großflächige Lichtquelle. Der lichtdurchlässige
prismatische Keil 1 weist zwei große und gegeneinander geneigte
Seitenflächen 2 und 3 auf, von denen die große Seitenfläche 2
als Lichtaustrittsfläche dient, während die gegen diese geneigte
große Seitenfläche 3 mit einer durchsichtigen Zwischenschicht 7
flächig bedeckt ist. Diese Zwischenschicht 7 kann beispielsweise
auch dadurch erzielt werden, daß der Keil 1 in Klarlack tauchlackiert
wird und somit auf seiner gesamten Oberfläche mit einer Klarlackschicht überzogen wird. Dabei ist der optischen Brechungsindex der
Zwischenschicht 7 kleiner als der optische Brechungsindex des
Keils 1. Die Zwischenschicht 7 ist mit einer das Licht streuend
reflektierenden Pigmentschicht 8 bedeckt. Über die die gegeneinander
geneigten Seitenflächen 2 und 3 verbindenden schmalen Seitenfläche 4
des Keils 1 wird das Licht in den Keil 1 eingekoppelt, dabei steht
die Seitenfläche 4 auf der Grundfläche 5 und der Deckfläche 6
des Keils 1 senkrecht.

# BLAUPUNKT-WERKE GMBH 32 HILDESHEIM, Robert-Bosch-Straße 200

PLI Gebranzig-bz/tex1      - 4 -      20. Juni 1978
R.Nr. 1576

Das von einer nicht näher dargestellten Lampe durch die schmale
Seitenfläche 4 in den Keil 1 eingekoppelte Licht wird durch geeignete Dimensionierung des Keils 1 an der Grundfläche 5 und der
Deckfläche 6 des prismatischen Keils total reflektiert. An den
gegeneinander geneigten großen Seitenflächen 2 und 3 tritt ebenfalls je nach Einfallswinkel des Lichts Totalreflexion auf. Ein
Teil des einfallenden Lichts tritt durch die große und für den
Lichtaustritt bestimmte Seitenfläche 2 des Keils aus und trägt
zur Lichtausbeute bei.

Ein weiterer Lichtanteil tritt durch die gegen die Seitenfläche 2
geneigte Seitenfläche 3 in die gegenüber den Keil 1 optisch dünnere
Zwischenschicht 7 und durch diese auf die dieses Licht streuend
reflektierende Pigmentschicht 8 und wird somit irregulär in den
Keil 1 zurückgestreut und tritt nach ggf. weiteren Reflexionen
durch die für den Lichtaustritt bestimmte Seitenfläche 2 des
Keils 1 und trägt somit ebenfalls zur Lichtausbeute bei.

Durch die erfindungsgemäße Ausbildung der in der Figur 1 dargestellten Lichtquelle als prismatischer Keil 1 wird es erreicht, daß
das Licht aufgrund eines Zusammenwirkens von Totalreflexion, Streuung
und Lichtbrechung mit hoher Ausbeute und über die gesamte Lichtaustrittsfläche 2 des Keils 1 gleichmäßiger Leuchtdichte austritt.

Bei der in der Figur 2 dargestellten weiteren erfindungsgemäß als
Keil 1 ausgebildeten Lichtquelle ist die für den Lichtaustritt
bestimmte große Seitenfläche 2 des Keils 1 durch eine Vielzahl
äquidistanter und parallel zu der Grundfläche 5 des Keils 1 verlaufenden Mikrorillen 9 mattiert. Die gegen die für den Lichtaustritt
bestimmte Seitenfläche 2 des Keils 1 geneigte Seitenfläche 3 ist mit
einer das Licht streuend reflektierenden Schicht 10 hinterlegt.

# BLAUPUNKT-WERKE GMBH 32 HILDESHEIM, Robert-Bosch-Straße 200

PLI Gebranzig-bz/tex1          - 5 -          20. Juni 1978
                                              R.Nr. 1576

Das durch die die gegeneinander geneigten Seitenflächen 2 und
3 verbindende schmale Seitenfläche 4 in den Keil 1 eingekoppelte
Licht wird unter Mitwirkung der Mikrorillenstruktur 9 teilweise
durch die Seitenfläche 2 ausgekoppelt. Das aus dem Keil 1 auf
die Seitenfläche 3 gelangende Licht wird von dieser teilweise
total reflektiert und der verbleibende Teil, der nicht total
reflektiert wird, wird von der Schicht 10, die beispielsweise
als weißes Papier oder weißes Keramikplättchen mit unregelmäßig
strukturierter Oberfläche ausgebildet sein kann, in den Keil 1
streuend reflektiert und gelangt schließlich nach ggf. mehrfacher
Reflexion durch die Lichtaustrittsfläche 2.

Auch bei der in der Figur 2 dargestellten erfindungsgemäßen
Ausbildung der Lichtquelle wird das Licht aufgrund eines Zusammenwirkens von Totalreflexion, Streuung und Lichtbrechung mit hoher
Ausbeute und über die gesamte Lichtaustrittsfläche 2 gleichmäßiger
Leuchtdichte ausgekoppelt.

Die Lichteinkoppelung in den beispielsweise aus Acrylglas bestehenden
Keil durch die schmale Seitenfläche 4 kann bei den in den Figuren 1
und 2 dargestellten Keilen auf verschiedene Arten geschehen. So ist
es beispielsweise möglich, das Licht einer Glühbirne über eine
Lichtverteilerplatte, die Quaderform haben kann und deren eine
Seitenfläche mit der Seitenfläche 4 des Keils deckungsgleich ist,
einzukoppeln. Dazu ist es von Vorteil, den Keil mit der beschriebenen
Lichtverteilerplatte als einstückiges Bauteil auszubilden. In der
Lichtverteilerplatte kann für die Aufnahme der Glühbirne oder einer
anderen Lampe eine Ausnehmung vorgesehen werden, wodurch die Lichteinkopplung verbessert wird.

# BLAUPUNKT-WERKE GMBH 32 HILDESHEIM, Robert-Bosch-Straße 200

PLI Gebranzig-bz/tex1      - 6 -      20. Juni 1978
                                                    R.Nr. 1576

Erfindungsgmäße großflächige Lichtquellen zeichnen sich durch einen einfachen und störunanfälligen robusten Aufbau aus. Sie sind daher auch für die Beleuchtung von flachen transparenten Anzeigevorrichtungen, beispielsweise von Flüssigkristall-Displays in Fahrzeugen, sehr gut geeignet.

Großflächige Lichtquelle


Ansprüche


1. Großflächige Lichtquelle bestehend aus einem prismatischen
   lichtdurchlässigen Körper, in den durch eine kleine Seitenfläche Licht eintritt und der eine große Seitenfläche aufweist, durch die das Licht austritt, dadurch gekennzeichnet,
   daß der lichtdurchlässige Körper als dünner Keil (1) ausgebildet ist, das Licht durch eine die gegeneinander geneigten
   großen Seitenflächen (2, 3) verbindenden und auf einer
   Grundfläche (5) des Keils (1) senkrecht stehenden schmalen
   Seitenfläche (4) des Keils (1) in diesen eintritt und durch
   eine der gegeneinander geneigten großen Seitenflächen (2, 3)
   des Keils (1) austritt.


2. Lichtquelle nach Anspruch 1, dadurch gekennzeichnet, daß die
   gegen die für den Lichtaustritt bestimmte große Seitenfläche
   (2) geneigte große Seitenfläche (3) des Keils (1) mit einer
   dünnen lichtdurchlässigen Zwischenschicht (7) flächig bedeckt ist, der optische Brechungsindex dieser Zwischenschicht
   (7) kleiner ist als der optische Brechungsindex des Keils (1)
   und diese Zwischenschicht (7) mit einer das Licht streuend
   reflektierenden Pigmentschicht (8) flächig bedeckt ist.

# BLAUPUNKT-WERKE GMBH 32 HILDESHEIM, Robert-Bosch-Straße 200

PLI Gebranzig-bz/tex1                  - 2 -                  20. Juni 1978
                                                           R.Nr. 1576

3.  Lichtquelle nach den Ansprüchen 1 und 2, dadurch gekennzeichnet,
    daß die Zwischenschicht (7) als Klarlack auf die große Seitenfläche (3) des Keils (1) und die Pigmentschicht (8) als weiße
    Lackschicht auf die Zwischenschicht (7) aufgetragen sind.

4.  Lichtquelle nach Anspruch 1, dadurch gekennzeichnet, daß die
    für den Lichtaustritt bestimmte große Seitenfläche (2) des
    Keils (1) mattiert ist.

5.  Lichtquelle nach den Ansprüchen 1 und 4, dadurch gekennzeichnet,
    daß die für den Lichtaustritt bestimmte große Seitenfläche
    (2) des Keils (1) eine Vielzahl im wesentlichen äquidistanter
    Mikrorillen (9) aufweist und diese Mikrorillen (9) zu der
    Grundfläche (5) des Keils (1) parallel verlaufen.

6.  Lichtquelle nach den Ansprüchen 1, 4 und 5, dadurch gekennzeichnet, daß der Keil (1) an der gegen die für den Lichtaustritt bestimmten großen Seitenfläche (2) geneigten großen
    Seitenfläche (3) mit einer Licht streuend reflektierenden
    Schicht (10) hinterlegt ist.

## BLAUPUNKT-WERKE GMBH 32 HILDESHEIM, Robert-Bosch-Straße 200

Fig. 1

Fig. 2

**Europäisches Patentamt**

**EUROPÄISCHER RECHERCHENBERICHT**

0006450

Nummer der Anmeldung

79 101 584.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | AT - B - 247 145  (SOCIÉTE LUMIÈRE) <br> * Seite 3, Zeile 55 bis Seite 4, Zeile 3 * <br> -- | 1,6 |
| | US - A - 2 761 056 (J. LAZO) <br> * Fig. 3 * <br> -- | 1 |
| | US - A - 3 491 245 (G.K.C. HARDESTY) <br> * Spalte 3, Zeilen 41 bis 75 * <br> -- | 2,3 |
| | CH - A - 590 491 ( BBC AG) <br> * Anspruch 2 * <br> -- | 3 |
| | US - A - 3 838 565 ( JAMES S. CARLYLE) <br> * Spalte 3, Zeilen 45 bis 52 * <br> -- | 4,5 |
| A | DE - A - 2 503 663 ( K.K. DAINI SEIKOSHA) <br> * Anspruch 1 * <br> -- | 2 <br> – |
| A | DE - A - 1 497 294 (GENERAL ELECTRIC COMPANY) <br> * Anspruch 1 * <br> -- | 5 |
| A | DE - A - 2 511 252 ( K.K. DAINI SEIKOSHA) <br> * Seite 4 unten * <br> -- <br> ./... | |

**KLASSIFIKATION DER ANMELDUNG (Int.Cl.3)**

G 02 B   5/02
F 21 V   5/02
G 09 F   9/00
G 12 B  11/02

**RECHERCHIERTE SACHGEBIETE (Int. Cl.3)**

F 21 V   5/00
G 02 B   5/00
G 09 F   9/00
G 12 B  11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Berlin | 17-09-1979 | FUCHS |

EPA form 1503.1   06.78

Europäisches
Patentamt

**EUROPÄISCHER RECHERCHENBERICHT**

0006450

Nummer der Anmeldung

EP 79 101 584.5

-Seite 2-

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| A | US - A - 3 838 909 (EUGENE T. FITZGIBBONS) <br><br> * ganzes Dokument * <br><br> ---- | |

**KLASSIFIKATION DER ANMELDUNG (Int.Cl.3)**

**RECHERCHIERTE SACHGEBIETE (Int. Cl.3)**

EPA Form 1503.2   06.78